# FASCICULE DE BREVET EUROPEEN

(11) **EP 4 320 387 B1**
(45) Date de publication et mention de la délivrance du brevet: **18.11.2026**
(21) Numéro de dépôt: 22720946.7
(22) Date de dépôt: 04.04.2022
(51) Int. Cl.: F23J 15/00, F23J 15/04, F23J 15/06, F23J 15/08, F23L 7/00, F23L 15/04, F23N 5/00

(54) **SYSTÈME DE COMBUSTION UTILISANT COMME COMBURANT UN MÉLANGE DE DIOXYGÈNE ET D'UN GAZ DÉSHUMIDIFIÉ OBTENU Á PARTIR DES FUMÉES DE COMBUSTION**
VERBRENNUNGSSYSTEM MIT EINER MISCHUNG AUS MOLEKULAREM SAUERSTOFF UND EINEM ENTFEUCHTETEN GAS AUS VERBRENNUNGSRAUCH ALS OXIDATOR
COMBUSTION SYSTEM USING, AS AN OXIDISER, A MIXTURE OF MOLECULAR OXYGEN AND A DEHUMIDIFIED GAS OBTAINED FROM COMBUSTION FUMES

(30) Priorité: 07.04.2021 FR 2103568
(43) Date de publication de la demande: 14.02.2024
(73) Titulaire: Carbodown, 59310 Nomain (FR)
(72) Inventeur: ZEMMOURI, Jaouad, 59310 Nomain (FR)
(74) Mandataire: Matkowska, Franck
(86) Numéro de dépôt international: PCT/EP2022/058847
(87) Numéro de publication internationale: WO 2022/214421

(56) Documents cités:
- WO-A1-99/51367
- WO-A2-2016/071648
- US-A- 5 732 571

## Description

### Domaine technique

La présente invention concerne le domaine de la combustion d'un combustible au moyen d'un comburant issu d'un mélange de dioxygène (O₂) et d'un gaz déshumidifié obtenu à partir des fumées de combustion.

### Art antérieur

La combustion classique consiste à mélanger dans une installation de combustion (four, chaudière, etc.) de l'air (comburant) à un combustible dans des conditions de hautes températures pour créer l'oxydation. La réaction est exothermique et s'entretient naturellement. L'air contient 18% de dioxygène (O₂) et le volume d'air utilisé est contrôlé de sorte que la quantité de dioxygène soit suffisante pour la combustion.

En combustion classique, les fumées de combustion sont composées principalement de diazote (N₂), de vapeur d'eau (H₂O) et de dioxyde de carbone (CO₂). Si on souhaite capter le CO₂ de ces fumées, il est aisé d'éliminer la vapeur d'eau en condensant ces fumées de combustion et en recueillant l'eau sous forme liquide. En revanche la difficulté principale réside dans la séparation de l'azote et du dioxyde carbone. En outre, en combustion classique, et selon le type de combustible utilisé, les fumées de combustion peuvent également comporter d'autres gaz polluants, en quantité plus ou moins importante, tels que par exemple SOx (oxydes de soufre), NOx (oxydes d'azote), HCl (chlorure d'hydrogène), HF (fluorure d'hydrogène), etc... Par conséquent si on souhaite capter le CO₂ de ces fumées, il faut également séparer le CO₂ de ces autres polluants.

Un système de combustion de l'art antérieure est connue par example de la publication WO 99/51367 A1.

Plusieurs solutions ont été envisagées pour capter le CO₂ dans des fumées issues de combustion classique, mais leur coût reste très élevé.

Pour réduire l'émission de polluants dans les fumées de combustion, il est connu de remplacer la combustion classique susvisée, par une combustion, dite « oxycombustion », dans laquelle l'air (comburant) est remplacé par du dioxygène pur dans des proportions stœchiométriques, le nombre d'atomes d'oxygène étant égal à celui nécessaire pour oxyder l'ensemble des atomes du combustible.

La production de dioxygène pour mettre en œuvre l'oxycombustion peut par exemple être obtenue de manière connue par cryogénie ou par électrolyse de l'eau.

Dans le cas par exemple d'une oxycombustion de méthane (CH₄), on produit des fumées de combustion constituées d'1/3 de CO₂ et de 2/3 d'eau en volume. Dans le cas d'autres combustibles, on aura en plus les polluants issus de la combustion, comme par HCl, SOx, etc. Si le combustible n'est pas azoté, de manière avantageuse les fumées ne contiendront naturellement pas de NOx.

L'équation de la réaction chimique de l'oxycombustion du méthane (CH₄) est la suivante :

CH₄ + 2O₂ → CO₂ + 2H₂O -891 kJ/mole de CH₄

Cela signifie que chaque mole de CH₄ produira une puissance de 891 kJ vers l'extérieur.

Pour les autres combustibles, les réactions sont analogues, avec l'apparition d'autres composés si le combustible contient d'autres atomes que le carbone et l'hydrogène.

Dans le cas par exemple de l'oxycombustion du méthane, on constate qu'il est plus aisé de capter le CO₂. Il suffit pour cela de condenser l'eau des fumées par un procédé de refroidissement ou d'assèchement pour obtenir du CO₂ à l'état gazeux.

Il est donc connu à ce jour de mettre en œuvre condenseur pour condenser les fumées d'oxycombustion afin de faciliter le captage du CO₂.

Une difficulté importante de l'oxycombustion réside toutefois dans la difficulté de maîtrise de la combustion, car à la différence de la combustion classique, la température d'oxycombustion peut rapidement et de manière non contrôlée devenir très élevée dans la chambre de combustion, de sorte que les installations de combustion classiques ne résistent pas.

Pour pallier cette difficulté, on a déjà proposé d'améliorer l'oxycombustion, en recyclant au moins une partie des fumées de combustion comportant du CO₂, en les mélangeant avec le dioxygène pur, de manière à obtenir un gaz comburant (O₂-CO₂) qui permet avantageusement d'abaisser la température de combustion.

Ce perfectionnement permet une combustion à base de dioxygène plus facilement maitrisée, par rapport à une oxycombustion mettant en œuvre uniquement du dioxygène pur comme comburant, tout en réduisant l'émission de polluants par rapport à une combustion classique et en facilitant le captage du CO₂.

Avec cette solution de recyclage d'une partie des fumées de combustion, étant donné que les fumées de combustion contiennent nécessairement de la vapeur d'eau (H₂O), on est contraint d'introduire dans l'installation de combustion un gaz comburant humide, dont la teneur en eau peut être trop élevée et/ou n'est pas maitrisée, ce qui est préjudiciable pour la fiabilité et le bon fonctionnement de l'installation de combustion et peut en outre engendrer une corrosion préjudiciable de l'installation de combustion dans le temps.

Au surplus, lorsque le combustible utilisé produit des fumées de combustion comportant des polluants tels que par exemple SOx (oxydes de soufre), NOx (oxydes d'azote), HCl (chlorure d'hydrogène), **HF** (fluorure d'hydrogène), etc..., le recyclage d'une partie des fumées de combustion aboutit à une augmentation préjudiciable de la concentration dans le temps des polluants dans les fumées de combustion et n'est donc pas envisageable. La solution susvisée de recyclage d'une partie des fumées de combustion n'est donc en pratique envisageable qu'avec des fumées de combustion constituées uniquement de dioxyde de carbone et d'eau et dépourvues de polluant, telles que les fumées de combustion obtenues par combustion d'un hydrocarbure saturé de type alcane (méthane, propane, ...) avec du dioxygène.

### Objectif de l'invention

L'invention a pour objectif principal de proposer un système de combustion comportant une installation de combustion, qui permet la combustion d'un combustible au moyen d'un comburant obtenu par mélange de dioxygène (O₂) et d'un gaz obtenu à partir d'au moins une partie de fumées de combustion, et qui permet une meilleure maîtrise de la qualité du gaz comburant utilisé dans l'installation de combustion.

### Résumé de l'invention

L'invention a ainsi pour objet un système de combustion comportant une unité de production de gaz comburant, une installation de combustion permettant la combustion d'un combustible au moyen dudit gaz comburant, une unité de condensation adaptée pour condenser les fumées de combustion produites par l'installation de combustion, par mise en contact des fumées de combustion avec au moins un liquide refroidissant, en sorte de produire un gaz déshumidifié, c'est-à-dire un gaz ayant une humidité absolue inférieure à celle des fumées de combustion à l'entrée de l'unité de condensation, des moyens de recyclage, qui permettent d'alimenter l'unité de production de gaz comburant avec au moins une partie recyclée du gaz déshumidifié en sortie de l'unité de condensation, une unité de fourniture de dioxygène, qui permet d'alimenter en dioxygène l'unité de production de gaz comburant. L'unité de production de gaz comburant permet d'alimenter l'installation de combustion avec un gaz comburant issu du mélange de dioxygène et de la partie recyclée dudit gaz déshumidifié. Le système de combustion comporte également une unité de régulation, qui a pour fonction de réguler automatiquement la température du liquide refroidissant de l'unité de condensation.

Le système de combustion présente également les caractéristiques techniques suivantes (a) et/ou(b) :
(a) Il comporte également au moins un capteur permettant de mesurer l'humidité absolue ou relative dans la partie recyclée (GDR) du gaz déshumidifié et/ou au moins un capteur permettant de mesurer l'humidité absolue ou relative dans le gaz comburant (GC) et/ou au moins un capteur permettant de mesurer l'humidité absolue ou relative dans les fumées de combustion et ladite unité de régulation a pour fonction de réguler automatiquement la température du liquide refroidissant de l'unité de condensation en fonction au moins de l'humidité absolue ou relative mesurée par ledit capteur dans la partie recyclée (GDR) du gaz déshumidifié et/ou en fonction au moins de l'humidité absolue ou relative mesurée dans le gaz comburant (GC) par ledit capteur et/ou en fonction au moins de l'humidité absolue ou relative mesurée dans les fumées de combustion par ledit capteur ;
   et/ou
**(b)** l'installation de combustion est caractérisée par une plage de fonctionnement définissant une humidité absolue ou relative maximale et une humidité absolue ou relative minimale, et l'unité de régulation a pour fonction de réguler automatiquement la température du liquide refroidissant de l'unité de condensation en sorte de maintenir l'humidité absolue ou relative du gaz comburant (GC) dans ladite plage de fonctionnement de l'installation de combustion.

La régulation automatique de la température du liquide refroidissant de l'unité de condensation permet avantageusement de maîtriser l'humidité absolue dans la partie recyclée du gaz déshumidifié avant son introduction dans l'unité de production de gaz comburant. Le chauffage de la partie recyclée dudit gaz déshumidifié permet d'augmenter la température de la partie recyclée du gaz déshumidifié avant son introduction dans l'unité de production de gaz comburant, et ainsi d'éloigner avantageusement cette température de la partie recyclée dudit gaz déshumidifié de son point de rosée.

Plus particulièrement, le système de combustion de l'invention peut comporter les caractéristiques additionnelles et optionnelles suivantes, prises isolément, ou en combinaison les unes avec les autres :
- L'unité de régulation a pour fonction de réguler automatiquement la température du liquide refroidissant de l'unité de condensation de manière à maintenir humidité absolue ou relative de la partie recyclée du gaz déshumidifié GD dans une plage de fonctionnement prédéfinie.
- L'unité de régulation a pour fonction de réguler automatiquement la température du liquide refroidissant de l'unité de condensation de manière à maintenir l'humidité absolue ou relative du gaz comburant dans une plage de fonctionnement prédéfinie.
- L'unité de régulation a pour fonction de réguler automatiquement la température du liquide refroidissant de l'unité de condensation de manière à maintenir l'humidité absolue ou relative des fumées de combustion dans une plage de fonctionnement prédéfinie.
- L'unité de régulation a pour fonction de réguler automatiquement la température du liquide refroidissant de l'unité de condensation en sorte de maintenir la température du liquide refroidissant de l'unité de condensation à une température prédéfinie ou dans une dans une plage de températures prédéfinie.
- le système de combustion comporte un moyen de chauffage est adapté pour chauffer la partie recyclée dudit gaz déshumidifié de préférence au moyen de calories prélevées dans les fumées de combustion.
- le moyen de chauffage est adapté pour chauffer la partie recyclée (GDR) dudit gaz déshumidifié, de telle sorte que la température du gaz comburant à l'entrée de l'installation de combustion est dans une plage de températures prédéfinie et/ou que la température du gaz comburant à l'entrée de l'installation de combustion est au-dessus du point de rosée du gaz comburant.
- L'unité de condensation comporte au moins un dispositif de condensation comportant un bain de liquide refroidissant, et des moyens d'injection permettant de faire passer les fumées de combustion à travers ce bain de liquide refroidissant, et de préférence dans lequel les moyens d'injection permettent d'injecter les fumées de combustion au-dessous de la surface (S) de ce bain de liquide de refroidissant.
- Le système de combustion comporte un dispositif d'alimentation adapté pour introduire un ou plusieurs additifs de traitement dans le liquide refroidissant, afin de traiter le ou les polluants susceptibles d'être captés dans le liquide refroidissant.
- le système de combustion comporte au moins un capteur mesurant le pH du liquide refroidissant ou mesurant la concentration d'au moins un polluant dans le liquide refroidissant, et un dispositif d'alimentation adapté pour introduire automatiquement un ou plusieurs additifs de traitement dans le liquide refroidissant, en fonction du pH mesuré ou de la concentration mesurée.
- ledit au moins un additif de traitement est une base, et plus particulièrement NaOH, KOH, Ca(OH)₂ ou est un acide et plus particulièrement de l'acide sulfurique, ou est du peroxyde d'hydrogène ou est un agent floculant.
- Le système de combustion comporte une unité dépollution (qui est positionnée entre l'unité de condensation et le point de recyclage de la partie recyclée de gaz déshumidifié, et qui a pour fonction de retirer au moins une partie du ou des polluants contenus dans le gaz déshumidifié obtenu en sortie de l'unité de condensation, de manière à recycler, jusque l'entrée de l'unité de production de gaz comburant, une partie recyclée de gaz déshumidifié au moins en partie dépollué.
- Le système de combustion comporte une unité dépollution qui est positionnée entre l'installation de combustion et l'unité de condensation, et qui a pour fonction de retirer au moins une partie du ou des polluants contenus dans les fumées de combustion, avant leur passage dans l'unité de condensation, de manière à introduire à l'entrée de l'unité de condensation des fumées de combustion au moins en partie dépolluées.
- L'unité dépollution est adaptée pour capter un ou plusieurs polluants choisis parmi la liste suivante : particules fines, SOx, NOx, acides, métaux lourds, ammoniac, COV.
- L'unité dépollution comporte au moins un dispositif de lavage adapté pour mettre en contact le gaz déshumidifié à dépolluer ou les fumées de combustion à dépolluer avec un liquide de lavage.
- Le dispositif de lavage comporte un bain de liquide de lavage, et des moyens d'injection permettant de faire passer le gaz déshumidifié à dépolluer ou les fumées de combustion à dépolluer à travers ce bain de liquide de lavage, et de préférence dans lequel moyens d'injection permettent d'injecter le gaz déshumidifié à dépolluer ou les fumées de combustion à dépolluer au-dessous de la surface de ce bain de liquide de lavage.
- le système de combustion comporte une unité de captage de dioxyde de carbone (CO₂) dans la partie non recyclée du gaz déshumidifié.

L'invention a également pour objet l'utilisation du système de combustion susvisé, dans lequel l'unité de combustion est alimentée avec le combustible et avec un gaz comburant issu du mélange de dioxygène (O₂) et d'une partie recyclée d'un gaz déshumidifié obtenu à partir des fumées de combustion.

Plus particulièrement, le système de combustion de l'invention peut comporter les caractéristiques additionnelles et optionnelles suivantes, prises isolément, ou en combinaison les unes avec les autres :
- On régule automatiquement la température du liquide refroidissant.
- On chauffe la partie recyclée du gaz déshumidifié avant son introduction dans l'unité de production de gaz comburant.
- O prélève des calories dans les fumées de combustion et on les utilise pour chauffer la partie recyclée du gaz déshumidifié avant son introduction dans l'unité de production de gaz comburant.
- On chauffe la partie recyclée dudit gaz déshumidifié, de telle sorte que la température du gaz comburant à l'entrée de l'installation de combustion est dans une plage de températures prédéfinie et/ou que la température du gaz comburant à l'entrée de l'installation de combustion (1) est au-dessus du point de rosée du gaz comburant.
- Le combustible est choisi en sorte de produire en sortie de l'installation de combustion des fumées de combustion qui comportent, et de préférence sont constituées, de dioxyde de carbone (CO₂) de vapeur d'eau, et éventuellement de dioxygène.
- Le combustible est un hydrocarbure, et de préférence un hydrocarbure saturé de type alcane (CₙH₂ₙ₊₂).
- Les fumées de combustion produites en sortie de l'installation de combustion comportent du dioxyde de carbone (CO₂) de la vapeur d'eau, éventuellement du dioxygène, et un ou plusieurs polluants, et plus particulièrement un ou plusieurs polluants choisis parmi la liste suivante : particules fines, SOx, NOx, acides, métaux lourds, ammoniac, COV.
- On dépollue en tout ou partie les fumées de combustion au cours de leur passage dans l'unité de condensation.
- On dépollue en tout ou partie les fumées de combustion avant leur passage dans l'unité de condensation.
- On dépollue en tout ou partie le gaz déshumidifié avant recyclage d'une partie de ce gaz déshumidifiée à l'entrée de l'unité de production de gaz comburant.
- On capte le dioxyde de carbone (CO₂) dans la partie non recyclée du gaz déshumidifié.

### Brève description des figures

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- La figure 1 est une représentation schématique d'une première variante particulière de réalisation d'une installation de combustion de l'invention ;
- La figure 2 représente de manière schématique une variante particulière de réalisation d'un échangeur pouvant être mis en œuvre dans l'unité de condensation du système de combustion de la figure 1 ;
- La figure 3 une représentation schématique d'une deuxième variante particulière de réalisation d'une installation de combustion de l'invention mettant en œuvre un recyclage d'une partie des fumées de combustion avant condensation ;
- La figure 4 est une représentation schématique d'une troisième variante particulière de réalisation d'une installation de combustion de l'invention, mettant en œuvre une dépollution des fumées de combustion lors de leur passage dans l'unité de condensation ;
- La figure 5 est une représentation schématique d'une quatrième variante particulière de réalisation d'une installation de combustion de l'invention, mettant en œuvre une unité de dépollution du gaz déshumidifié en sortie de l'unité de condensation et avant recyclage vers l'unité de production de gaz comburant ;
- La figure 6 est une représentation schématique d'une cinquième variante particulière de réalisation d'une installation de combustion de l'invention, mettant en œuvre une unité de dépollution des fumées de combustion, avant leur introduction dans l'unité de condensation ;
- La figure 7 représente de manière schématique une variante particulière de réalisation d'un dispositif de lavage pouvant être mis en œuvre dans l'unité de dépollution du système de combustion de la figure 5 ou de la figure 6 ;
- La figure 8 est une représentation schématique d'une sixième variante particulière de réalisation d'une installation de combustion de l'invention mettant en œuvre un récupérateur de chaleur pour prélever une partie des calories dans les fumées de combustion et pour les utiliser pour chauffer la partie recyclée de gaz déshumidifié.

### Description détaillée

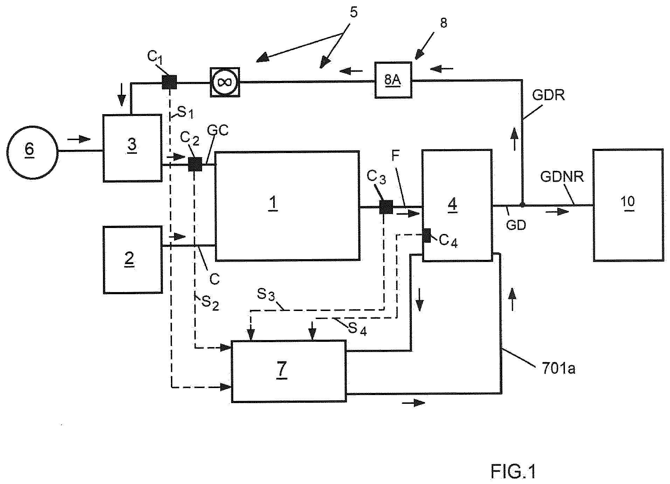

On a représenté schématiquement sur la figure 1 une première variante de réalisation d'un système de combustion de l'invention comportant :
- une installation de combustion 1, qui en fonctionnement est alimentée en combustible C par des moyens d'alimentation 2 ;
- une unité 3 de production d'un gaz comburant GC, qui permet en fonctionnement d'alimenter l'installation de combustion 1 avec un gaz comburant GC ;
- une unité de condensation 4, qui est adaptée pour condenser les fumées de combustion F produites par l'installation de combustion 1 ;
- des moyens de recyclage 5, qui permettent d'alimenter l'unité 3 de production de gaz comburant, avec au moins une partie recyclée GDR du gaz déshumidifié GD obtenu en sortie de l'unité de condensation 4,
- une unité de fourniture de dioxygène 6, qui alimente en dioxygène l'unité de production 3 de gaz comburant,
- une unité de régulation 7.

L'unité de production 3 permet en fonctionnement de produire un gaz comburant GC issu du mélange du dioxygène pur (O₂), fourni par l'unité 6, avec la partie recyclée GDR dudit gaz déshumidifié GD obtenu en sortie de l'unité de condensation 4.

L'unité de fourniture de dioxygène 6 peut être de tout type connu et peut par exemple être une unité de production de dioxygène par cryogénie et/ou une unité de production de dioxygène par électrolyse l'eau. L'unité de fourniture de dioxygène 6 peut également ne pas être conçue pour produire du dioxygène in situ, mais peut simplement comporter un moyen de stockage de dioxygène qui aura été préalablement produit sur un autre site.

L'installation de combustion 1 permet d'une manière générale de réaliser une oxycombustion du combustible C au moyen dudit gaz comburant GC dans une chambre de combustion, l'énergie thermique résultant de cette combustion pouvant indifféremment selon l'invention être utilisée dans tout type d'application nécessitant un apport thermique, et par exemple et de manière non limitative pour chauffer un fluide dans une installation de chauffage (non représentée). Cette installation de combustion peut indifféremment selon l'invention être une chaudière, un four, etc.

Le recyclage à l'entrée de l'unité de production 3 de la partie recyclée GDR du gaz déshumidifié GD obtenu en sortie de l'unité de condensation 4 permet, de manière connue en soi, de mieux contrôler la réaction d'oxycombustion dans l'installation de combustion 3 et d'abaisser significativement la température de combustion dans l'installation de combustion 1, comparativement à une réaction d'oxycombustion qui serait réalisée à partir uniquement de dioxygène pur comme comburant.

Dans le cadre de l'invention, le combustible C peut être très différent d'une application à l'autre et peut selon le cas se présenter sous forme solide, liquide ou gazeuse.

La réaction de combustion du combustible C au moyen du gaz comburant GC produit des fumées de combustion F dont la composition dépend du combustible utilisé.

La variante particulière de réalisation de la figure 1 est plus particulièrement adaptée pour fonctionner avec un combustible C produisant des fumées de combustion F qui sont constituées de dioxyde de carbone (CO₂) et d'eau (H₂O) sous forme de vapeur d'eau, et éventuellement de dioxygène et qui sont dépourvues de polluants par exemple de polluants de type SOx, NOx ou acides.

Ainsi, de manière non limitative et non exhaustive, le combustible C utilisé dans le système de combustion de la figure 1 peut par exemple être un hydrocarbure de tout type, et par exemple un hydrocarbure conventionnel issu du pétrole ou gaz naturel ou un hydrocarbure non conventionnel issu du gaz ou pétrole de schiste, des schistes ou sables bitumeux, du gaz de houille, du biogaz, du singaz, etc.

Par exemple, lorsque le combustible C est un hydrocarbure saturé de type alcane (CₙH₂ₙ₊₂), la réaction de combustion dans l'installation est de manière connue :

CₙH₂ₙ₊₂ + (3n+1)/2 O₂ → nCO₂ + (n+1)H₂O - Energie (kJ/mole de CₙH₂ₙ₊₂)

L'unité de condensation 4 est adaptée pour condenser les fumées de combustion F produites par l'installation de combustion 1 en mettant en contact ces fumées de combustion F avec un liquide refroidissant **L,** en sorte de produire un gaz déshumidifié GD ayant une humidité absolue inférieure à celle des fumées de combustion F à l'entrée de l'unité de condensation 4.

L'unité de condensation 4 peut ainsi d'une manière générale comporter tout type d'échangeur permettant, par tout moyen, de mettre directement en contact, les fumées de combustion avec un liquide refroidissant L dont la température est inférieure à celle des fumées de combustion, de manière à réaliser une condensation d'au moins une partie de l'eau contenue dans les fumées de combustion F.

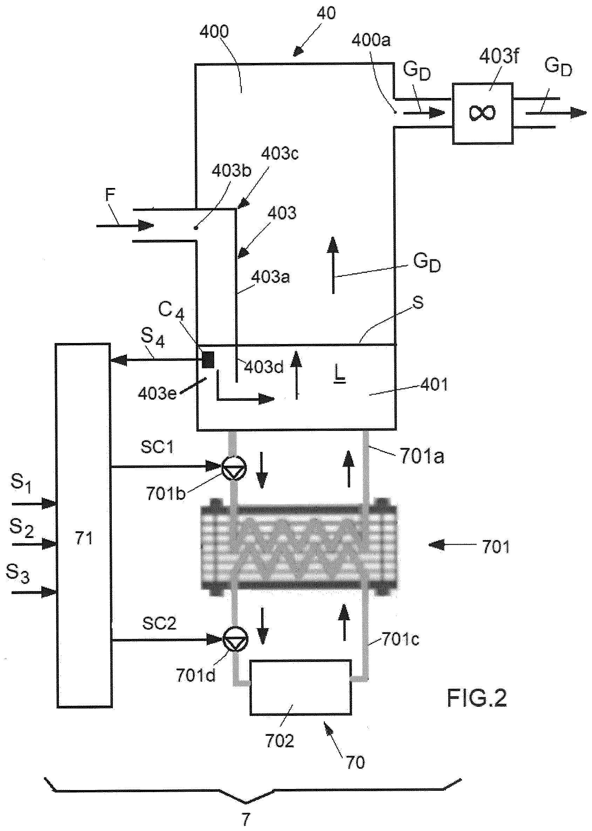

Dans une variante préférée de réalisation illustrée sur la figure 2 , cet échangeur 40 comporte (figure 2) une enceinte 400 contenant un bain 401 de liquide refroidissant L et des moyens d'injection 403, qui sont adaptés pour introduire les fumées de combustion F au-dessous de la surface S du bain de liquide refroidissant L.

Ces moyens d'injection 403 peuvent plus particulièrement comporter un ventilateur ou compresseur 403f et un conduit 403a comportant une ouverture d'admission 403b, par exemple dans sa partie supérieure 403c. La partie inférieure 403d du conduit d'injection 403a est plongée dans le bain 401 de liquide refroidissant L et comporte une ouverture d'évacuation 403e immergée dans le bain 401 de liquide refroidissant L.

En fonctionnement, le ventilateur ou compresseur 403f permet d'aspirer les fumées de combustion F en sortie de l'installation de combustion 1 et de les introduire dans le conduit d'injection 403 par l'ouverture d'admission 403b. Ces fumées de combustion F s'échappent du conduit d'injection 403 par l'ouverture d'évacuation 403e, et sont de ce fait introduites de manière forcée dans le bain 401 de liquide refroidissant **L,** au-dessous de la surface S du bain 401 de liquide refroidissant **L,** remontent vers la surface S du bain de liquide, s'échappent de l'enceinte 400 par l'ouverture d'évacuation 400a de l'enceinte 400 sous la forme du gaz déshumidifié GD susvisé

La température T_{L} du liquide refroidissant L est toujours inférieure à la température T_{F} des fumées de combustion F à l'entrée de l'échangeur 40 et est de préférence inférieure à la température de rosée (point de rosée) des fumées de combustion.

On rappellera que l'humidité absolue (gₑₐᵤ/ kg_{air sec}] d'un gaz représente le nombre de grammes de vapeur d'eau présents dans un volume de gaz donné, rapporté à la masse de gaz sec de ce volume exprimé en kilogramme. Sa valeur reste constante même si la température du gaz varie en restant toutefois supérieure au point de rosée du gaz.

On rappellera également que l'humidité relative d'un gaz (exprimée en %) est le rapport entre la pression partielle de vapeur d'eau et la pression de saturation de la vapeur d'eau.

Lors de leur passage à travers le bain 401 de liquide refroidissant L, les fumées de combustion F subissent une condensation au contact du liquide refroidissant L, de sorte que l'humidité absolue du gaz déshumidifié GD, en sortie de l'unité de condensation 4 est inférieure à l'humidité absolue des fumées de combustion F à l'entrée de l'unité de condensation 4.

L'écart entre l'humidité absolue du gaz déshumidifié GD et l'humidité absolue des fumées de combustion F dépend notamment de l'écart entre la température T_{F} des fumées de combustion F et la température T_{L} plus basse du liquide refroidissant L. Plus l'écart en température ΔT (ΔT = T_{F} - T_{L}) entre la température T_{F} des fumées de combustion F et la température T_{L} du liquide refroidissant L est important, et plus l'humidité absolue du gaz déshumidifié GD sera faible par rapport à l'humidité absolue des fumées de combustion F.

En sortie du bain 401 de liquide refroidissant L, l'humidité relative du gaz déshumidifié GD sera en revanche plus élevée, et peut dans certaines conditions de fonctionnement être proche, et voire atteindre la saturation, c'est-à-dire dire 100% d'humidité relative.

Dans une autre variante, le ventilateur ou compresseur 403f peut être raccordé au conduit d'injection 403 et utilisé de manière à introduire les fumées de combustion F dans ce conduit d'injection 403 en les soufflant à travers l'ouverture d'admission 403b de ce conduit d'injection 403.

Dans une autre variante de réalisation, l'unité de condensation 4 peut comporter plusieurs échangeurs 40 montés en cascade.

L'invention n'est pas limitée à la mise en œuvre d'un échangeur 40 du type de celui de la figure 2. Dans d'autres variantes de réalisation, l'échangeur 40 pour la condensation des fumées de combustion F peut par exemple être du type de celui décrit dans la demande de brevet internationale WO2016/071648 ou dans la demande de brevet internationale WO2020/030419 ou peut être un échangeur fonctionnant par pulvérisation du liquide refroidissant L au contact des fumées de combustion F

Quel que soit le type d'échangeur utilisé pour la condensation de fumées de combustion par mise en contact des fumées de combustion F avec un liquide refroidissant **L,** l'unité de régulation 7 est adaptée pour réguler automatiquement la température T_{L} du liquide refroidissant L de l'unité de condensation 4.

Plus particulièrement, en référence à la figure 1, pour réaliser cette régulation automatique de la température du liquide refroidissant **L, le** système de combustion comporte de préférence au moins l'un des capteurs d'humidité suivants:
- un capteur C1, qui délivre un signal de mesure S1 mesurant l'humidité (absolue ou relative) dans la partie recyclée du gaz déshumidifiée GDR,
- un capteur C2, qui délivre un signal de mesure S2 mesurant l'humidité (absolue ou relative) dans le gaz de combustion GC introduit dans l'installation de combustion 1,
- un capteur C3, qui délivre un signal de mesure S3 mesurant l'humidité (absolue ou relative) dans les fumées de combustion en sortie de l'installation de combustion 1.

Dans cette variante de réalisation, l'unité de régulation 7 est d'une manière générale conçue pour réguler automatiquement la température T_{L} du liquide refroidissant L de l'unité de condensation 4 en fonction au moins de l'humidité (absolue ou relative) mesurée par au moins un des capteurs C1, C2 ou C3.

Dans une variante, l'unité de régulation 7 est conçue pour réguler automatiquement la température T_{L} du liquide refroidissant L de l'unité de condensation 4 en fonction uniquement de l'humidité (absolue ou relative) mesurée par un seul capteur parmi les capteurs C1, C2, C3.

Dans une autre variante, l'unité de régulation 7 est conçue pour ajuster automatiquement la température T_{L} du liquide refroidissant L de l'unité de condensation 4 en fonction de chaque humidité (absolue ou relative) mesurée par au moins deux capteurs parmi les capteurs C1, C2, C3.

Dans une autre variante, l'unité de régulation 7 est conçue pour ajuster automatiquement la température T_{L} du liquide refroidissant L de l'unité de condensation 4 en fonction des humidités (absolues ou relatives) mesurées par les trois capteurs C1, C2, C3.

Cette régulation automatique de la température du liquide refroidissant L par l'unité de régulation 7 permet avantageusement de contrôler et d'ajuster et automatiquement l'humidité absolue dans la partie recyclée GDR du gaz déshumidifié GD à l'entrée de l'unité de production 3 de gaz comburant GC. En augmentant la température T_{L} du liquide refroidissant L, on augmente l'humidité absolue dans la partie recyclée GDR du gaz déshumidifié GD. En diminuant la température T_{L} du liquide refroidissant L, on diminue l'humidité absolue dans la partie recyclée GDR du gaz déshumidifié GD.

En utilisant le capteur C1, la régulation automatique la température T_{L} du liquide refroidissant L peut par exemple être réalisée de manière à maintenir l'humidité (absolue ou relative) TH de la partie recyclée GDR du gaz déshumidifié GD à l'entrée de l'unité de production 3 de gaz comburant GC dans une plage de fonctionnement (THₘᵢₙ ; THₘₐₓ) prédéfinie (THₘᵢₙ <TH< THₘₐₓ) et compatible avec l'installation de combustion 1. Cette plage de fonctionnement est définie au cas par cas en fonction des caractéristiques de l'installation de combustion 1.

En utilisant le capteur C2, la régulation automatique de la température T_{L} du liquide refroidissant L peut par exemple être réalisée de manière à maintenir l'humidité (absolue ou relative) TH du gaz comburant GC à l'entrée de l'installation de combustion dans une plage de fonctionnement (THₘᵢₙ ; THₘₐₓ) prédéfinie (THₘᵢₙ < TH< THₘₐₓ) et compatible avec l'installation de combustion 1. Cette plage de fonctionnement est définie au cas par cas en fonction des caractéristiques de fonctionnement de l'installation de combustion 1.

En utilisant le capteur C3, la régulation automatique de la température T_{L} du liquide refroidissant L peut par exemple être réalisée de manière à maintenir l'humidité (absolue ou relative) TH des fumées de combustions F en sortie de l'installation de combustion 1 dans une plage de fonctionnement (THₘᵢₙ ; THₘₐₓ) prédéfinie (THₘᵢₙ < TH< THₘₐₓ). Cette plage de fonctionnement est définie au cas par cas en fonction des caractéristiques de fonctionnement de l'installation de combustion 1.

Plus particulièrement, l'humidité (absolue ou relative) TH de la partie recyclée GDR du gaz déshumidifié GD à l'entrée de l'unité de production 3 de gaz comburant GC a une influence significative sur les caractéristiques du gaz comburant GC produit par l'unité de production 3, et en particulier une influence significative sur l'humidité (absolue ou relative) du gaz comburant GC et sur le point de rosée du gaz comburant GC.

La régulation automatique de la température T_{L} du liquide refroidissant L est de préférence réalisée en sorte de maintenir l'humidité (absolue ou relative) du gaz comburant GC dans une plage de fonctionnement compatible avec l'installation de combustion 1, cette plage de fonctionnement pouvant être fournie par le fabricant de l'installation de combustion 1 ou pouvant être déterminée par l'utilisateur de l'installation de combustion 1.

Plus particulièrement, la ou les plages de fonctionnement susvisées (THₘᵢₙ ; THₘₐₓ) seront définies au cas par cas pour obtenir le maintien susvisé de l'humidité (absolue ou relative) du gaz comburant GC.

En référence à la figure 1, l'installation de combustion comporte également un moyen de chauffage 8 permettant avantageusement de chauffer la partie recyclée GDR du gaz déshumidifié GD, ce qui permet en fonctionnement d'élever la température de la partie recyclée GDR du gaz déshumidifié GD avant son introduction dans l'unité 3 de production de gaz comburant GC.

Ce moyen de chauffage 8 peut être par exemple un dispositif chauffant 8A alimenté par une source d'énergie, tel que par exemple un chauffage électrique.

Cette élévation de la température de la partie recyclée GDR du gaz déshumidifié GD a pour objectif d'éloigner de son point de rosée la température de la partie recyclée GDR du gaz déshumidifié GD, avant son introduction dans l'unité 3 de production de gaz comburant GC, en particulier de manière à réduire, et de préférence à éviter, les risques de condensation du gaz comburant GC dans l'installation de combustion 1 et limiter dans le temps la formation de rouille préjudiciable sur les parois de l'installation de combustion 1.

Il revient à l'homme du métier de définir au cas par cas l'élévation de température requise pour la partie recyclée GDR du gaz déshumidifié GD, en particulier de telle sorte, par exemple, que la température du gaz comburant GC à l'entrée de l'installation de combustion 1 soit dans une plage de températures prédéfinie, et notamment préconisée pour l'installation de combustion 1 et/ou que la température du gaz comburant GC à l'entrée de l'installation de combustion 1 soit au-dessus du point de rosée du gaz comburant GC.

Ce moyen de chauffage 8 est particulièrement utile lorsque l'humidité relative de la partie recyclée GDR du gaz déshumidifié GD est élevée, et en pratique est utile plus particulièrement lorsque l'unité de condensation 4 met en œuvre un dispositif du type de celui de la figure 2.

On a représenté sur la figure 2, à titre d'exemple non limitatif de l'invention, une variante particulière de réalisation de l'unité de régulation 7. Dans cette variante particulière de réalisation, l'unité de régulation 7 comporte un dispositif de refroidissement 70, qui permet de modifier la température du liquide refroidissant L de l'échangeur 40, au moins un capteur de température C4 délivrant un signal de mesure S4 mesurant la température du liquide refroidissant L dans le bain 401 de l'enceinte 400 de l'échangeur 40, une unité de traitement électronique 71 adaptée pour commander automatiquement le dispositif de refroidissement 70 à partir du signal de mesure de température S4 et de l'un au moins des signaux de mesure d'humidité S1, S2, S3.

L'unité de traitement électronique 71 peut être une unité de traitement électronique programmable, par exemple du type automate programmable, qui est programmée pour réaliser la régulation automatique de température du liquide refroidissant L.

Plus particulièrement, l'unité de traitement électronique 71 peut être conçue, et notamment programmée, pour calculer automatiquement au moins une température de consigne T_{cons} variable à partir de l'un au moins des signaux de mesure d'humidité S1, S2, S3 au moyen d'une fonction f prédéfinie [ T_{cons} = f(S1) ou T_{cons} = f(S2) ou T_{cons} = f(S3), ou T_{cons} = F(S1 ; S2) ou T_{cons} = f(S1 ; S3) ou T_{cons} = f( S2 ; S3) ou T_{cons} = f(S1 ; S2 ; S3)], et pour commander automatiquement le dispositif de refroidissement 70, de telle sorte, qu'en fonctionnement stabilisé (régime permanent) du système de combustion la température mesurée par le signal S4, soit sensiblement égale à la température de consigne T_{cons}.

L'unité de traitement électronique 71 peut également être conçue, et notamment programmée, pour calculer automatiquement une plage de température de consigne (Tₘᵢₙ ;Tₘₐₓ) variable, à partir de l'un au moins des signaux de mesure d'humidité S1, S2, S3 au moyen d'une fonction f prédéfinie, et pour commander automatiquement le dispositif de refroidissement 70 de telle sorte qu'en fonctionnement stabilisé (régime permanent) du système de combustion la température mesurée par le signal S4 soit maintenue dans la plage de température de consigne (Tₘᵢₙ ;Tₘₐₓ).

Plus particulièrement et de manière non limitative de l'invention, dans la variante particulière de réalisation de la figure 2, le dispositif de refroidissement 70 comporte un échangeur 701, par exemple de type échangeur à plaques, comportant une première boucle 701a, dans laquelle le liquide refroidissant L peut être mis en circulation fermée au moyen d'une pompe 701b et une deuxième boucle 701c, dans laquelle un liquide caloporteur peut être mis en circulation fermée au moyen d'un pompe 701d, un moyen de refroidissement 702 du liquide caloporteur étant en outre prévu sur la deuxième boucle 701c. Ce liquide caloporteur en circulation dans la deuxième boucle 701c permet de refroidir le liquide refroidissant L circulant dans la première boucle par un échange thermique sans contact entre les deux liquides.

En fonctionnement, le bain 401 de liquide refroidissant L prélève des calories dans les fumées de combustion F, lors de leur passage à travers le bain 401 de liquide, ce qui contribue à faire monter la température du bain 401d de liquide L. L'unité de traitement électronique 71 commande automatiquement les pompes 701b et 701d au moyen respectivement des signaux de commande SC1 et SC2, en fonction de la température de consigne T_{cons} susvisée ou de la plage de température de consigne (Tₘᵢₙ ;Tₘₐₓ) susvisée, et de la température mesurée dans le bain de liquide L (signal S4), en sorte de suffisamment refroidir le liquide refroidissant L et maintenir la température mesurée par le signal S4 à une valeur sensiblement égale à la température de consigne T_{cons} ou de maintenir la température mesurée par le signal S4 dans la plage de température de consigne (Tₘᵢₙ ;Tₘₐₓ).

Dans une variante de réalisation plus simple, la température de consigne T_{cons} ou la plage de température de consigne (Tₘᵢₙ ;Tₘₐₓ) peut être prédéfinie au cas par cas en étant adaptée à l'installation de combustion et entrée comme paramètre dans l'unité de régulation 7. Dans ce cas, le ou les capteurs d'humidité C1, C2 et C3 ne sont pas nécessaires.

En référence à la figure 1, la partie non recyclée GDNR du gaz déshumidifié GD est traitée par au moins une unité 10 de captage de CO₂, qui permet, de manière connue en soi, de capter le CO₂ en retirant toute l'eau et le dioxygène contenus dans la partie non recyclée GDNR du gaz déshumidifié GD. Le dioxygène capté peut également être injecté dans l'unité 3 de production de gaz comburant GC, afin de réduire la consommation de dioxygène fourni par l'unité 6.

Lorsque la partie non recyclée GDNR du gaz déshumidifié GD est dépourvue de polluant, l'opération de captage de CO₂ est plus facile comparativement au captage de CO₂ dans un gaz contenant des polluants de type SOx, NOx, acides, etc....

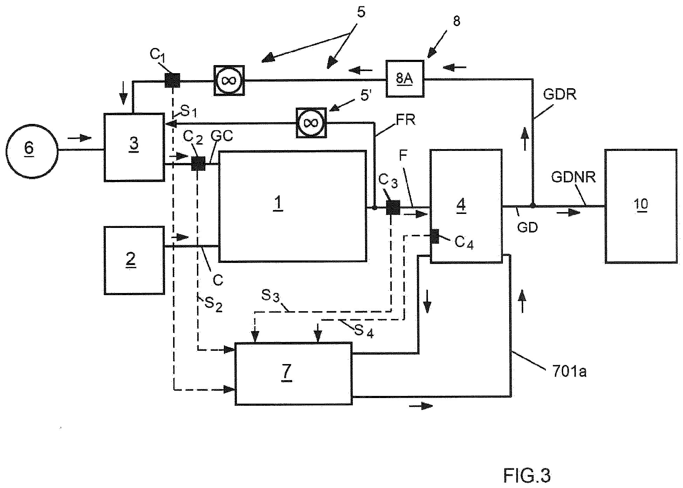

On a représenté sur la figure 3, une deuxième variante de système de combustion qui se différencie du système de combustion de la figure 1 en ce que l'installation comporte de moyens de recyclage 5', qui permettent de recycler une partie FR des fumées de combustion F à l'entrée de l'unité 3 de production de gaz comburant GC, en amont de l'unité de condensation 4, c'est-à-dire une partie FR des fumées de combustion F qui n'ont pas été déshumidifiées dans l'unité de condensation 4.

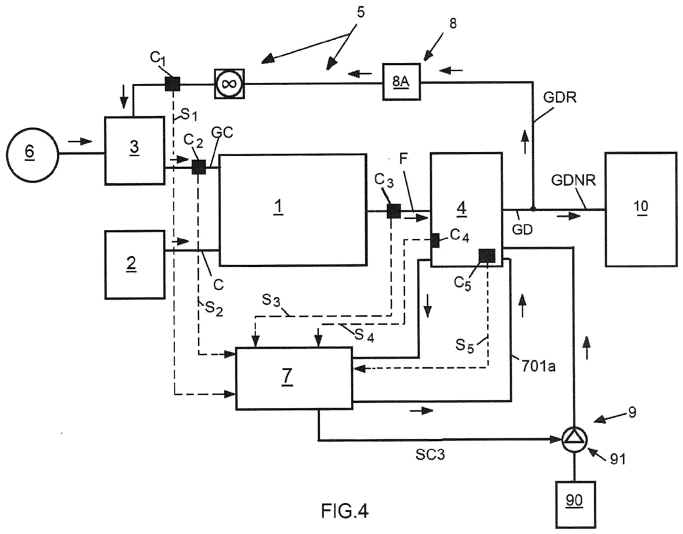

On a représenté sur la figure 4, une troisième variante d'un système de combustion, qui peut être utilisée pour fonctionner, non seulement avec un combustible C produisant des fumées de combustion F qui sont constituées uniquement du dioxyde de carbone (CO₂) et d'eau (H₂O), et éventuellement de dioxygène, mais qui est également adapté pour fonctionner avec un combustible C produisant des fumées de combustion F, qui comportent du dioxyde de carbone (CO₂), de l'eau (H₂O), éventuellement de dioxygène ainsi que divers polluants en concentration plus ou moins importante, tels que par exemple et de manière non exhaustive des SOx (oxydes de soufre) et/ou NOx (oxydes d'azote) et/ou des acides de type HCl (chlorure d'hydrogène) et/ou HF (fluorure d'hydrogène), et/ou de l'ammoniac et/ou des particules fines et/ou des métaux lourds, etc... Ce combustible C est par exemple obtenu à partir de biomasse ou de combustible solide de récupération.

La présence de ces polluants dans les fumées de combustion F complique le captage du CO₂ comparativement à des fumées de combustion constituées uniquement de dioxyde de carbone (CO₂) et d'eau (H₂O).

En référence à la figure 4, le système de combustion se différencie de celui de la figure 1 en ce qu'il comporte de manière additionnelle un dispositif d'alimentation 9, comportant un réservoir 90, qui contient au moins un additif de traitement ou un mélange de plusieurs additifs de traitement différents, et qui est raccordé à l'unité de condensation 4, via une pompe alimentation 91 ou équivalent, contrôlée par l'unité de régulation 7, et par exemple par l'unité de traitement électronique 71 susvisée, au moyen d'un signal de commande SC3.

Ce dispositif 9 permet, en fonctionnement, d'ajouter un ou plusieurs additifs de traitement dans le liquide refroidissant L de l'unité de condensation 4, de manière contrôlée par l'unité de régulation 7.

Un additif de traitement peut être sous différentes formes, notamment sous forme de liquide, de poudre sèche ou en solution, et est adapté au(x) type(s) de polluant(s) susceptibles d'être contenus dans les fumées de combustion F.

Un additif de traitement est choisi de manière à pouvoir réagir au contact d'au moins un type de polluant contenu dans le liquide refroidissant L de l'unité de condensation 4, de manière à neutraliser ledit polluant.

A titre d'exemples non limitatifs et non exhaustifs, lorsque les fumées de combustion F sont susceptibles de contenir des polluants acides tels que des SOx (oxydes de soufre), des acides de type HCl (chlorure d'hydrogène) et/ou **HF** (fluorure d'hydrogène), etc..., l'additif de traitement peut être une base telle que notamment NaOH, KOH, ou peut-être de l'hydroxyde de calcium Ca(OH)₂.

Lorsque les fumées de combustion F sont susceptibles de contenir des polluants de type NOx (oxydes d'azote), l'additif de traitement peut également être une base telle que notamment NaOH, KOH, ou peut-être de l'hydroxyde de calcium Ca(OH)₂ ou du peroxyde d'hydrogène (H₂O₂).

Lorsque les fumées de combustion F sont susceptibles de contenir des polluants, tel que de l'ammoniac, qui en solution produisent une solution ayant un pH basique, telle qu'une solution aqueuse d'ammoniaque (NH₄OH) l'additif de traitement peut également être un acide, tel que par exemple de l'acide sulfurique (H₂SO₄).

Lorsque les fumées de combustion F sont susceptibles de contenir des COV (Composés Organiques Volatiles), l'additif de traitement peut être un agent floculant.

De préférence, le système de combustion comporte au moins un capteur C5 (figure 4), qui délivre un signal de mesure S5 mesurant le pH du liquide refroidissant L ou la concentration d'au moins un type d'agent polluant dans le liquide refroidissant L.

L'unité de régulation 7 est conçue de manière à piloter automatiquement la pompe 91, au moyen du signal de commande SC3, de manière à réguler automatiquement l'ajout d'additif(s) de traitement dans le liquide refroidissant L, en fonction du pH ou de la concentration en additif(s) de traitement mesurée par le capteur C5, de telle sorte par exemple que le pH du liquide refroidissant L soit le plus proche de 7, ou de telle sorte par exemple que la concentration en additif(s) de traitement dans le liquide refroidissant L soit la plus faible possible et notamment inférieure à seuil maximum prédéfini.

En fonctionnement, lorsque les fumées de combustion F contiennent divers polluants en concentration plus ou moins importante, tels que par exemple et de manière non exhaustive des SOx (oxydes de soufre) et/ou NOx (oxydes d'azote) et/ou des acides de type HCl (chlorure d'hydrogène) et/ou HF (fluorure d'hydrogène), et/ou de l'ammoniac et/ou des particules fines et/ou des métaux lourds, etc..., lors de leur mise en contact avec le liquide refroidissant L dans l'unité de condensation 4 , et en particulier lors de leur passage dans le bain 401 de liquide refroidissant L de l'unité de condensation 4 de la figure 2, le ou les polluants sont avantageusement captés et sont le cas échéant de préférence neutralisés dans le liquide refroidissant L, ce qui permet d'obtenir en sortie de l'unité de condensation 4 un gaz déshumidifié (GD ) qui est au moins en partie suffisamment dépollué. On évite ainsi de recycler une quantité trop importante de polluants à l'entrée de l'unité 3 de production de gaz comburant GC.

Dans une autre variante, il est possible également de mettre en œuvre plusieurs dispositifs d'alimentation 9 contenant des additif(s) de traitement différents et commandés en parallèle par l'unité de régulation 7.

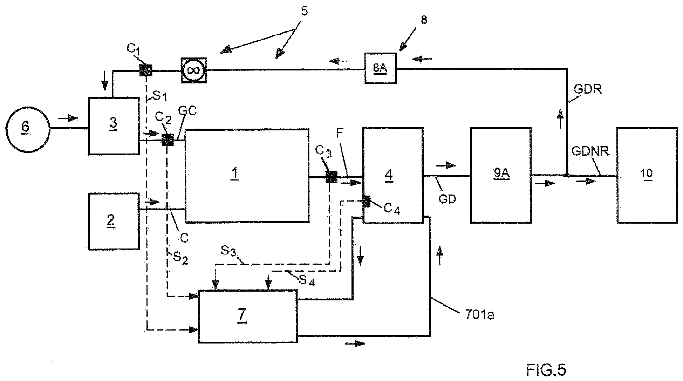

On a représenté sur la figure 5, une quatrième variante d'un système de combustion, qui se différencie de celui de la figure 1, en ce qu'il comporte en outre une unité de dépollution 9A, qui dans cette variante de réalisation est positionnée entre l'unité de condensation 4 et le point de recyclage de la partie GDR de gaz déshumidifié GD.

Cette unité de dépollution 9A a pour fonction de retirer au moins une partie, et de préférence une quantité suffisante, du ou des polluants contenus dans le gaz déshumidifié GD obtenu en sortie de l'unité de condensation 4, de manière à recycler jusque l'entrée de l'unité 3 de production de gaz comburant une partie GDR de gaz déshumidifié au moins en partie dépolluée, et de préférence suffisamment dépolluée et constituée principalement de CO₂,d'H₂O sous forme de vapeur d'eau, et éventuellement de dioxygène.

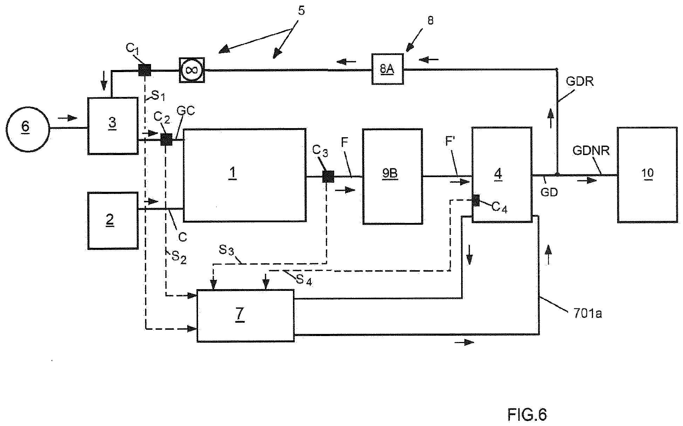

On a représenté sur la figure 6, une cinquième variante d'un système de combustion qui se différencie de celui de la figure 1 en ce qu'il comporte en outre une unité de dépollution 9B, qui dans cette variante de réalisation est positionnée entre l'installation de combustion 1 et l'unité de condensation 4. Cette unité de dépollution 9B a pour fonction de retirer au moins une partie, et de préférence la totalité, du ou des polluants contenus dans les fumées de combustions **F,** avant leur passage dans l'unité de condensation 4, de manière à introduire à l'entrée de l'unité de condensation 4 des fumées de combustion F' au moins en partie dépolluées, et de préférence suffisamment dépolluées et constituée principalement de CO₂ et d'H₂O sous forme de vapeur d'eau, et éventuellement de dioxygène.

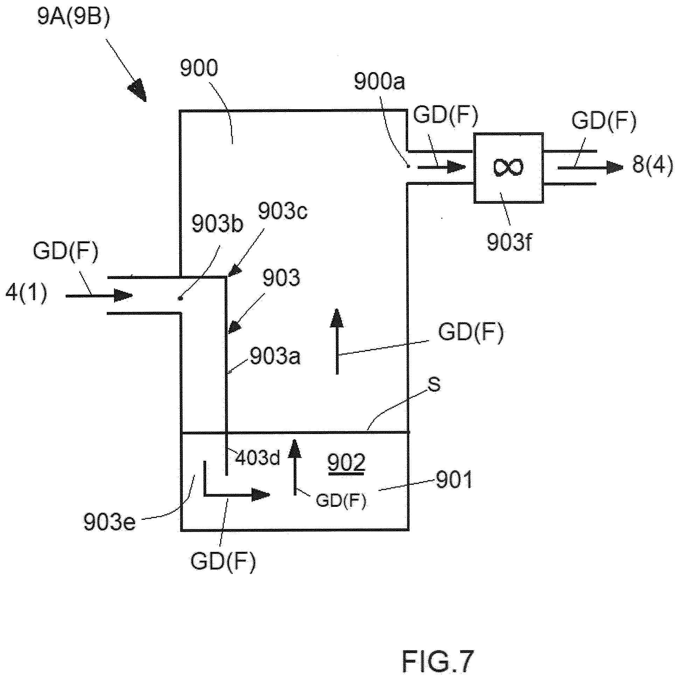

On a représenté sur la figure 7, un exemple particulier de réalisation d'une unité de dépollution 9A (respectivement 9B).

Dans cet exemple particulier de réalisation, l'unité de dépollution 9A ou 9B comporte un dispositif de lavage 90, qui peut d'une manière générale être constitué par tout type d'échangeur permettant de mettre en contact, par tout moyen, le gaz déshumidifié GD à dépolluer ou les fumées de combustion F à dépolluer avec un liquide de lavage, de manière à capter dans le liquide de lavage au moins une partie du ou des polluants contenus dans le gaz déshumidifié GD ou dans les fumées de combustion F.

Dans une variante préférée de réalisation illustrée sur la figure 7, ce dispositif de lavage 9A (ou 9B) est de préférence un dispositif de lavage, du type comportant une enceinte 900 contenant un bain 901 de liquide de lavage 902 et des moyens d'injection 903, qui sont adaptés pour introduire le gaz déshumidifié GD à dépolluer ou les fumées de combustion F à dépolluer au-dessous de la surface S du bain 901 de liquide lavage 902.

Ces moyens d'injection 903 peuvent plus particulièrement comporter un ventilateur ou compresseur 903f et un conduit 903a comportant une ouverture d'admission 903b, par exemple dans sa partie supérieure 903c. La partie inférieure 903d du conduit d'injection 903a est plongée dans le bain de liquide 901 de lavage 902 et comporte une ouverture d'évacuation 903e immergée dans le bain 901 de liquide de lavage 902.

En fonctionnement, le ventilateur ou compresseur 403f permet d'aspirer et d'introduire dans le conduit d'injection 903, par l'ouverture d'admission 903b, le gaz déshumidifié GD à dépolluer en sortie de l'unité de condensation 4 ou les fumées de combustion F à dépolluer en sortie de l'installation de combustion 1. Le gaz déshumidifié GD à dépolluer (ou les fumées de combustion F) s'échappe du conduit d'injection 903 par l'ouverture d'évacuation 903e, et est de ce fait introduit de manière forcée dans le bain 901 de liquide de lavage 902, au-dessous de la surface S du bain 901 de liquide de lavage 902, remonte vers la surface S du bain de liquide, s'échappent de l'enceinte 900 par l'ouverture d'évacuation 900a de l'enceinte 400 sous la forme d'un gaz déshumidifié GD dépollué (ou de fumées de combustion F dépolluées).

Dans une autre variante, le ventilateur ou compresseur 903f peut être raccordé au conduit d'injection 903 et utilisé de manière à introduire le gaz déshumidifié GD à dépolluer ou les fumées de combustion F à dépolluer en les soufflant à travers l'ouverture d'admission 903b de ce conduit d'injection 903.

Lors de leur passage à travers le dispositif de lavage 90, le ou les polluants sont captés dans le bain 901 de liquide de lavage 902.

Le bain 901 de liquide de lavage 902 peut être le même pendant tout le traitement ou peut être renouvelé automatiquement, pendant le traitement, avec du liquide de lavage non pollué afin de maintenir une concentration basse de polluant(s) capté(s) dans le bain 901 de liquide de lavage 902.

Le liquide de lavage 902 peut être de l'eau ou une solution aqueuse.

Le liquide de lavage 902 peut également contenir un ou plusieurs additifs de traitement et peut être équipé d'au moins d'un dispositif d'alimentation en additif(s) de traitement, tel que cela a été précédemment décrit pour la variante de la figure 4.

Dans une autre variante de réalisation, l'unité de dépollution 9A (ou 9B) peut comporter plusieurs dispositifs de lavage 9A (ou 9B) montés en cascade.

Dans une autre variante de réalisation, l'unité de dépollution 9A ou 9B peut être conçue pour mettre en œuvre un traitement de dépollution à sec.

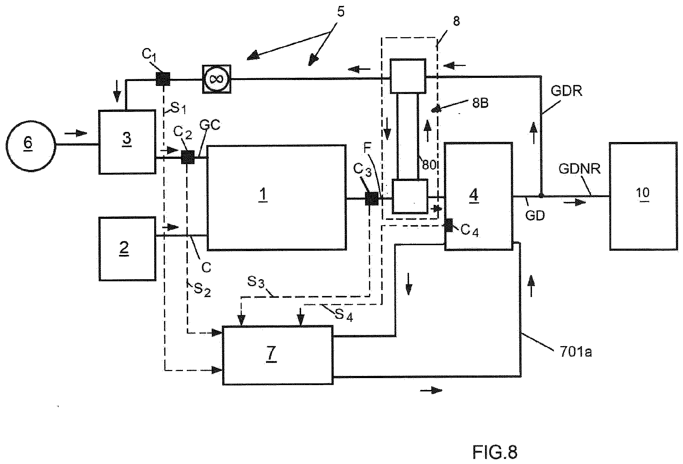

On a représenté sur la figure 8, une variante de réalisation d'une installation de combustion qui se différencie de celle de la figure 1 en ce que le moyen de chauffage 8 comporte un récupérateur de chaleur 8B, de type échangeur gaz/gaz, comportant une boucle enthalpique 80 dans laquelle circule un fluide caloporteur. Ce récupérateur de chaleur 8B permet de prélever une partie au moins des calories dans les fumées de combustion F et de les transférer à la partie recyclée GDR du gaz déshumidifié GD, afin d'obtenir l'élévation de température souhaitée pour la partie recyclée GDR du gaz déshumidifié GD, avant son introduction dans l'unité 3 de production de gaz comburant GC.

Ce moyen de chauffage 8 avec récupérateur de chaleur 8B peut également être mis en œuvre en complément ou en remplacement du moyen chauffage 8 précédemment décrit pour les variantes des figures 1,3, 4, 5 et 6.

Dans le cadre de l'invention, le moyen de chauffage 8 des figures 1,3, 4, 5, 6 et 8 peut toutefois être optionnel, l'installation de combustion pouvant en être dépourvue.

Dans une autre variante de l'invention, l'installation de combustion peut également comporter un tel moyen de chauffage 8 et être dépourvue d'une régulation automatique de la température du liquide refroidissant L.

De manière préférentielle toutefois, l'installation de combustion comporte à la fois l'unité de régulation 7 et le moyen de chauffage 8.

## Revendications

1. Système de combustion comportant une unité de production (3) de gaz comburant (GC), une installation de combustion (1) permettant la combustion d'un combustible (C) au moyen dudit gaz comburant (GC), une unité de condensation (4) adaptée pour condenser les fumées de combustion (F ; F') produites par l'installation de combustion (1), par mise en contact des fumées de combustion (F ; F') avec au moins un liquide refroidissant (L), en sorte de produire un gaz déshumidifié (GD), des moyens de recyclage (5), qui permettent d'alimenter l'unité de production (3) de gaz comburant avec au moins une partie recyclée (GDR) du gaz déshumidifié en sortie de l'unité de condensation (4), une unité de fourniture de dioxygène (6), qui permet d'alimenter en dioxygène l'unité de production (3) de gaz comburant, l'unité (3) de production de gaz comburant permettant d'alimenter l'installation de combustion (1) avec un gaz comburant (GC) issu du mélange de dioxygène et de la partie recyclée (GDR) dudit gaz déshumidifié (GD), le système de combustion comportant également une unité de régulation (7), qui a pour fonction de réguler automatiquement la température (T_{L}) du liquide refroidissant (L) de l'unité de condensation (4), le système de combustion comportant également les caractéristiques techniques suivantes (a) et/ou (b) :
**(a)** Il comporte au moins un capteur (C1) permettant de mesurer l'humidité absolue ou relative dans la partie recyclée (GDR) du gaz déshumidifié et/ou au moins un capteur (C2) permettant de mesurer l'humidité absolue ou relative dans le gaz comburant (GC) et/ou au moins un capteur (C3) permettant de mesurer l'humidité absolue ou relative dans les fumées de combustion et l'unité de régulation (7) a pour fonction de réguler automatiquement la température (T_{L}) du liquide refroidissant (L) de l'unité de condensation (4) en fonction au moins de l'humidité absolue ou relative mesurée par ledit capteur (C1) dans la partie recyclée (GDR) du gaz déshumidifié et/ou en fonction au moins de l'humidité absolue ou relative mesurée dans le gaz comburant (GC) par ledit capteur (C2) et/ou en fonction au moins de l'humidité absolue ou relative mesurée dans les fumées de combustion par ledit capteur (C3)
et/ou
(b) l'installation de combustion (1) est **caractérisée par** une plage de fonctionnement définissant une humidité absolue ou relative maximale et une humidité absolue ou relative minimale, et l'unité de régulation (7) a pour fonction de réguler automatiquement la température (T_{L}) du liquide refroidissant (L) de l'unité de condensation (4) en sorte de maintenir l'humidité absolue ou relative du gaz comburant (GC) dans ladite plage de fonctionnement de l'installation de combustion (1).

2. Système de combustion selon la revendication 1, comportant un moyen de chauffage (8) de la partie recyclée (GDR) dudit gaz déshumidifié (GD), et de préférence dans lequel le moyen de chauffage est adapté pour chauffer la partie recyclée (GDR) dudit gaz déshumidifié (GD) au moyen de calories prélevées dans les fumées de combustion.

3. Système de combustion selon la revendication 1 ou 2, dans lequel l'unité de régulation (7) a pour fonction de réguler automatiquement la température (T_{L}) du liquide refroidissant (L) de l'unité de condensation (4) de manière à maintenir humidité absolue ou relative (TH) de la partie recyclée (GDR) du gaz déshumidifié GD dans une plage de fonctionnement (THₘᵢₙ ; THₘₐₓ) prédéfinie et/ou de manière à maintenir l'humidité absolue ou relative (TH) du gaz comburant (GC) dans une plage de fonctionnement (THₘᵢₙ ; THₘₐₓ) prédéfinie et/ou de manière à maintenir l'humidité absolue ou relative (TH) des fumées de combustion dans une plage de fonctionnement (THₘᵢₙ ; THₘₐₓ) prédéfinie et/ou en sorte de maintenir la température du liquide refroidissant (L) de l'unité de condensation (4) à une température prédéfinie ou dans une dans une plage de températures prédéfinie .

4. Système de combustion selon l'une quelconque des revendications précédentes, comportant un moyen de chauffage (8) qui est adapté pour chauffer la partie recyclée (GDR) dudit gaz déshumidifié (GD), de telle sorte que la température du gaz comburant (GC) à l'entrée de l'installation de combustion (1) est dans une plage de températures prédéfinie et/ou que la température du gaz comburant (GC) à l'entrée de l'installation de combustion (1) est au-dessus du point de rosée du gaz comburant (GC).

5. Système de combustion selon l'une quelconque des revendications précédentes, dans lequel l'unité de condensation (4) comporte au moins un dispositif de condensation (40) comportant un bain (401) de liquide refroidissant (L), et des moyens d'injection (403) permettant de faire passer les fumées de combustion (F ; F') à travers ce bain de liquide refroidissant (L), et de préférence dans lequel les moyens d'injection (403) permettent d'injecter les fumées de combustion (F ; F') au-dessous de la surface (S) de ce bain (401) de liquide de refroidissant (L).

6. Système de combustion selon l'une quelconque des revendications précédentes comportant un dispositif d'alimentation (9) adapté pour introduire un ou plusieurs additifs de traitement dans le liquide refroidissant (L), afin de traiter le ou les polluants susceptibles d'être captés dans le liquide refroidissant (L), et de préférence dans lequel au moins un additif de traitement est une base, et plus particulièrement **NaOH, KOH,** Ca(OH)₂ ou est un acide et plus particulièrement de l'acide sulfurique, ou est du peroxyde d'hydrogène ou est un agent floculant.

7. Système de combustion selon l'une quelconque des revendications précédentes, comportant au moins un capteur (C5) mesurant le **pH du** liquide refroidissant (L) ou mesurant la concentration d'au moins un polluant dans le liquide refroidissant (L), et un dispositif d'alimentation (9) adapté pour introduire automatiquement un ou plusieurs additifs de traitement dans le liquide refroidissant (L), en fonction du **pH** mesuré ou de la concentration mesurée, et de préférence dans lequel au moins un additif de traitement est une base, et plus particulièrement **NaOH, KOH,** Ca(OH)₂ ou est un acide et plus particulièrement de l'acide sulfurique, ou est du peroxyde d'hydrogène ou est un agent floculant.

8. Système de combustion selon l'une quelconque des revendications précédentes, comportant une unité dépollution (9A) qui est positionnée entre l'unité de condensation (4) et le point de recyclage de la partie recyclée (GDR) de gaz déshumidifié, et qui a pour fonction de retirer au moins une partie du ou des polluants contenus dans le gaz déshumidifié (GD) obtenu en sortie de l'unité de condensation (4), de manière à recycler, jusque l'entrée de l'unité (3) de production de gaz comburant, une partie recyclée (GDR) de gaz déshumidifié au moins en partie dépollué, et de préférence dans lequel l'unité dépollution (9A) est adaptée pour capter un ou plusieurs polluants choisis parmi la liste suivante : particules fines, SOx, NOx, acides, métaux lourds, ammoniac, COV.

9. Système de combustion selon l'une quelconque des revendications précédentes, comportant une unité dépollution (9B) qui est positionnée entre l'installation de combustion (1) et l'unité de condensation (4), et qui a pour fonction de retirer au moins une partie du ou des polluants contenus dans les fumées de combustion (F), avant leur passage dans l'unité de condensation (4), de manière à introduire à l'entrée de l'unité de condensation (4) des fumées de combustion (F') au moins en partie dépolluées et de préférence dans lequel l'unité dépollution (9B) est adaptée pour capter un ou plusieurs polluants choisis parmi la liste suivante : particules fines, SOx, NOx, acides, métaux lourds, ammoniac, COV.

10. Système de combustion selon l'une quelconque des revendications 8 ou 9, dans lequel l'unité dépollution (9A ;9B) comporte au moins un dispositif de lavage (90) adapté pour mettre en contact le gaz déshumidifié (GD) à dépolluer ou les fumées de combustion (F) à dépolluer avec un liquide de lavage (902).

11. Système de combustion selon la revendication 10, dans lequel le dispositif de lavage comporte un bain (901) de liquide de lavage (902), et des moyens d'injection permettant de faire passer le gaz déshumidifié (GD) à dépolluer ou les fumées de combustion (F) à dépolluer à travers ce bain (901) de liquide de lavage (902), et de préférence dans lequel moyens d'injection permettent d'injecter le gaz déshumidifié (GD) à dépolluer ou les fumées de combustion (F) à dépolluer au-dessous de la surface de ce bain de liquide de lavage.

12. Système de combustion selon l'une quelconque des revendications précédentes, comportant une unité (10) de captage de dioxyde de carbone (CO₂) dans la partie non recyclée (GDNR) du gaz déshumidifié (GD).

13. Utilisation du système de combustion selon l'une quelconque des revendications précédentes pour réaliser la combustion d'un combustible (C).

14. Utilisation selon la revendication 13, dans laquelle le combustible (C) est choisi en sorte de produire en sortie de l'installation de combustion (1) des fumées de combustion (F) qui comportent, et de préférence sont constituées, de dioxyde de carbone (CO₂) de vapeur d'eau, et éventuellement de dioxygène.

15. Utilisation selon la revendication 14, dans lequel le combustible (C) est un hydrocarbure, et de préférence un hydrocarbure saturé de type alcane (CₙH₂ₙ₊₂).

16. Utilisation selon l'une quelconque des revendications 13 à 15, dans laquelle les fumées de combustion (F) produites en sortie de l'installation de combustion (1) comportent du dioxyde de carbone (CO₂) de la vapeur d'eau, éventuellement du dioxygène, et un ou plusieurs polluants, et plus particulièrement un ou plusieurs polluants choisis parmi la liste suivante : particules fines, SOx, NOx, acides, métaux lourds, ammoniac, COV.

17. Utilisation selon la revendication 16, dans laquelle on dépollue en tout ou partie les fumées de combustion au cours de leur passage dans l'unité de condensation (4) et/ou dans laquelle on dépollue en tout ou partie les fumées de combustion avant leur passage dans l'unité de condensation (4) et/ou dans laquelle on dépollue en tout ou partie le gaz déshumidifié (GD) avant recyclage d'une partie (GDR) de ce gaz déshumidifiée (GD) à l'entrée de l'unité (3) de production de gaz comburant.

18. Utilisation selon l'une quelconque des revendications 13 à 17, dans lequel on capte le dioxyde de carbone (CO₂) dans la partie non recyclée (GDNR) du gaz déshumidifié (GD).

## Patentansprüche

1. Verbrennungssystem mit einer Einheit (3) zur Erzeugung von Oxidationsgas (GC), einer Verbrennungseinrichtung (1), welche die Verbrennung eines Brennstoffs (C) mittels des Oxidationsgases (GC) erlaubt, einer Kondensationseinheit (4), die dazu ausgelegt ist, die von der Verbrennungseinrichtung (1) erzeugten Verbrennungsabgase (F; F') zu kondensieren, indem die Verbrennungsabgase (F; F') mit mindestens einer Kühlflüssigkeit (L) in Kontakt gebracht werden, um ein entfeuchtetes Gas (GD) zu erzeugen, Recyclingmitteln (5), die es erlauben, der Einheit (3) zur Erzeugung von Oxidationsgas mindestens einen recycelten Teil (GDR) des entfeuchteten Gases am Ausgang der Kondensationseinheit (4) zuzuführen, einer Sauerstoffversorgungseinheit (6), die es erlaubt, die Einheit (3) zur Erzeugung von Oxidationsgas mit Sauerstoff zu versorgen, wobei die Einheit (3) zur Erzeugung von Oxidationsgas es erlaubt, die Verbrennungseinrichtung (1) mit einem Oxidationsgas (GC), das durch Mischen von Sauerstoff und dem recycelten Teil (GDR) des entfeuchteten Gases (GD) gebildet wird, zu versorgen,
wobei das Verbrennungssystem weiterhin eine Regulierungseinheit (7) aufweist, welche die Funktion hat, die Temperatur (T_{L}) der Kühlflüssigkeit (L) der Kondensationseinheit (4) automatisch zu regulieren,
wobei das Verbrennungssystem weiterhin die folgenden technischen Merkmale (a) und/oder (b) aufweist:
(a) es weist mindestens einen Sensor (C1) auf, mit dem die absolute oder relative Feuchtigkeit in dem recycelten Teil (GDR) des entfeuchteten Gases gemessen werden kann, und/oder mindestens einen Sensor (C2), mit dem die absolute oder relative Feuchtigkeit in dem Oxidationgas (GC) gemessen werden kann, und/oder mindestens einen Sensor (C3), mit dem die absolute oder relative Feuchtigkeit in den Verbrennungsabgasen gemessen werden kann, wobei die Regulierungseinheit (7) die Funktion hat, die Temperatur (T_{L}) der Kühlflüssigkeit (L) der Kondensationseinheit (4) automatisch in Abhängigkeit von mindestens der absoluten oder relativen Feuchtigkeit, die von dem Sensor (C1) in dem recycelten Teil (GDR) des entfeuchteten Gases gemessen wird, und/oder in Abhängigkeit von mindestens der absoluten oder relativen Feuchtigkeit, die in dem Oxidationsgas (GC) von dem Sensor (C2) gemessen wird, und/oder in Abhängigkeit von mindestens der absoluten oder relativen Feuchtigkeit, die in den Verbrennungsabgasen von dem Sensor (C3) gemessen wird, zu regulieren,
und/oder
(b) die Verbrennungseinrichtung (1) ist durch einen Betriebsbereich charakterisiert, der eine maximale absolute oder relative Feuchtigkeit und eine minimale absolute oder relative Feuchtigkeit definiert, wobei die Regulierungseinheit (7) die Funktion hat, die Temperatur (T_{L}) der Kühlflüssigkeit (L) der Kondensationseinheit (4) automatisch derart zu regulieren, dass die absolute oder relative Feuchtigkeit des Oxidationsgases (GC) in dem Betriebsbereich der Verbrennungseinrichtung (1) beibehalten wird.

2. Verbrennungssystem nach Anspruch 1, mit einem Mittel (8) zum Erhitzen des recycelten Teils (GDR) des entfeuchteten Gases (GD), wobei das Mittel zum Erhitzen bevorzugt dazu ausgelegt ist, den recycelten Teil (GDR) des entfeuchteten Gases (GD) mittels Wärmeenergie, die den Verbrennungsabgasen entnommen wird, zu heizen.

3. Verbrennungssystem nach Anspruch 1 oder 2, wobei die Regulierungseinheit (7) die Funktion hat, die Temperatur (T_{L}) der Kühlflüssigkeit (L) der Kondensationseinheit (4) automatisch zu regulieren, um die absolute oder relative Feuchtigkeit (TH) des recycelten Teils (GDR) des entfeuchteten Gases GD in einem vordefinierten Betriebsbereich (THₘᵢₙ; THₘₐₓ) zu halten, und/oder um die absolute oder relative Feuchtigkeit (TH) des Oxidationsgases (GC) in einem vordefinierten Betriebsbereich (THₘᵢₙ; THₘₐₓ) zu halten, und/oder um die absolute oder relative Feuchtigkeit (TH) der Verbrennungsabgase in einem vordefinierten Betriebsbereich (THₘᵢₙ; THₘₐₓ) zu halten, und/oder um die Temperatur der Kühlflüssigkeit (L) der Kondensationseinheit (4) bei einer vordefinierten Temperatur oder in einem vordefinierten Temperaturbereich zu halten.

4. Verbrennungssystem nach einem der vorhergehenden Ansprüche, mit einem Heizmittel (8), das dazu ausgelegt ist, den recycelten Teil (GDR) des entfeuchteten Gases (GD) derart zu heizen, dass die Temperatur des Oxidationsgases (GC) am Eingang der Verbrennungseinrichtung (1) in einem vordefinierten Temperaturbereich liegt, und/oder dass die Temperatur des Oxidationsgases (GC) am Eingang der Verbrennungseinrichtung (1) über dem Taupunkt des Oxidationsgases (GC) liegt.

5. Verbrennungssystem nach einem der vorhergehenden Ansprüche, wobei die Kondensationseinheit (4) mindestens eine Kondensationsvorrichtung (40), die ein Bad (401) der Kühlflüssigkeit (L) aufweist, und Einspritzmittel (403), die es erlauben, die Verbrennungsabgase (F; F') durch dieses Bad der Kühlflüssigkeit (L) zu leiten, aufweist, wobei bevorzugt die Einspritzmittel (403) es erlauben, die Verbrennungsabgase (F; F') unterhalb der Oberfläche (S) dieses Bads (401) aus Kühlflüssigkeit (L) einzuspritzen.

6. Verbrennungssystem nach einem der vorhergehenden Ansprüche, mit einer Zuführvorrichtung (9), die dazu ausgelegt ist, ein oder mehrere Behandlungsadditive in die Kühlflüssigkeit (L) einzuführen, um die Verunreinigung(en) zu behandeln, die in die Kühlflüssigkeit (L) gelangt sein können, wobei bevorzugt mindestens ein Behandlungsadditiv eine Base ist, insbesondere NaOH, KOH, Ca(OH)₂, oder eine Säure ist, insbesondere Schwefelsäure, oder Wasserstoffperoxid oder ein Flockungsmittel ist.

7. Verbrennungssystem nach einem der vorhergehenden Ansprüche, mit mindestens einem Sensor (C5), welcher den pH-Wert der Kühlflüssigkeit (L) oder die Konzentration mindestens einer Verunreinigung in der Kühlflüssigkeit (L) misst, und einer Zuführvorrichtung (9), die dazu ausgelegt ist, automatisch ein oder mehrere Behandlungsadditive in die Kühlflüssigkeit (L) einzuführen, in Abhängigkeit von dem gemessenen pH-Wert oder der gemessenen Konzentration, und wobei bevorzugt mindestens ein Behandlungsadditiv eine Base ist, insbesondere NaOH, KOH, Ca(OH)₂, oder eine Säure ist, insbesondere Schwefelsäure, oder Wasserstoffperoxid oder ein Flockungsmittel ist.

8. Verbrennungssystem nach einem der vorhergehenden Ansprüche, mit einer Reinigungseinheit (9A), die sich zwischen der Kondensationseinheit (4) und der Stelle des Recyclings des recycelten Teils (GDR) des entfeuchteten Gases befindet und die Funktion hat, mindestens einen Teil der Verunreinigung(en) zu entfernen, die in dem entfeuchteten Gas (GD) enthalten sind, das am Ausgang der Kondensationseinheit (4) erhalten wird, um bis zum Eingang der Einheit (3) zur Erzeugung von Oxidationsgas einen recycelten Teil (GDR) des entfeuchteten Gases zu recyceln, der mindestens teilweise gereinigt ist, und wobei die Reinigungseinheit (9A) bevorzugt dazu ausgelegt ist, einen oder mehrere Verunreinigungen aus der folgenden Liste aufzufangen: Feinstaub, SOx, NOx, Säuren, Schwermetalle, Ammoniak, VOC.

9. Verbrennungssystem nach einem der vorhergehenden Ansprüche, mit einer Reinigungseinheit (9B), die sich zwischen der Verbrennungseinrichtung (1) und der Kondensationseinheit (4) befindet und die Funktion hat, mindestens einen Teil der Verunreinigung(en) bzw. Schadstoffe zu entfernen, die in den Verbrennungsabgasen (F) enthalten sind, vor ihrem Durchgang durch die Kondensationseinheit (4), um am Eingang der Kondensationseinheit (4) mindestens teilweise gereinigte Verbrennungsabgase (F') einzuführen, wobei die Reinigungseinheit (9B) bevorzugt dazu ausgelegt ist, einen oder mehrere Verunreinigungen aus der folgenden Liste aufzufangen: Feinstaub, SOx, NOx, Säuren, Schwermetalle, Ammoniak, VOC.

10. Verbrennungssystem nach einem der Ansprüche 8 oder 9, wobei die Reinigungseinheit (9A; 9B) mindestens eine Waschvorrichtung (90) umfasst, die dazu ausgelegt ist, das zu reinigende entfeuchtete Gas (GD) oder die zu reinigenden Verbrennungsabgase (F) mit einer Waschflüssigkeit (902) in Kontakt zu bringen.

11. Verbrennungssystem nach Anspruch 10, wobei die Waschvorrichtung ein Bad (901) aus Waschflüssigkeit (902) aufweist, sowie Einspritzmittel, die es erlauben, das zu reinigende entfeuchtete Gas (GD) oder die zu reinigenden Verbrennungsabgase (F) durch dieses Bad (901) aus Waschflüssigkeit (902) zu leiten, wobei bevorzugt die Einspritzmittel es ermöglichen, das zu reinigende entfeuchtete Gas (GD) oder die zu reinigenden Verbrennungsabgase (F) unterhalb der Oberfläche dieses Bads aus Waschflüssigkeit einzuspritzen.

12. Verbrennungssystem nach einem der vorhergehenden Ansprüche, mit einer Einheit (10) zur Aufnahme von Kohlenstoffdioxid (CO₂) in dem nicht recycelten Teil (GDNR) des entfeuchteten Gases (GD).

13. Verwendung des Verbrennungssystems nach einem der vorhergehenden Ansprüche zur Durchführung der Verbrennung eines Brennstoffs (C).

14. Verwendung nach Anspruch 13, wobei der Brennstoff (C) so gewählt wird, dass am Ausgang der Verbrennungseinrichtung (1) Verbrennungsabgase (F) erzeugt werden, die Kohlenstoffdioxid (CO₂), Wasserdampf und gegebenenfalls Sauerstoff enthalten und bevorzugt daraus bestehen.

15. Verwendung nach Anspruch 14, wobei der Brennstoff (C) ein Kohlenwasserstoff ist, bevorzugt ein gesättigter Kohlenwasserstoff vom Alkantyp (CₙH₂ₙ₊₂).

16. Verwendung nach einem der Ansprüche 13 bis 15, wobei die am Ausgang der Verbrennungseinrichtung (1) erzeugten Verbrennungsabgase (F) Kohlenstoffdioxid (CO₂), Wasserdampf, gegebenenfalls Sauerstoff, und einen oder mehrere Verunreinigungen enthalten, und insbesondere einen oder mehrere Verunreinigungen aus der folgenden Liste: Feinstaub, SOx, NOx, Säuren, Schwermetalle, Ammoniak, VOC.

17. Verwendung nach Anspruch 16, wobei die Verbrennungsabgase ganz oder teilweise während ihres Durchgangs durch die Kondensationseinheit (4) gereinigt werden, und/oder wobei die Verbrennungsabgase ganz oder teilweise vor ihrem Durchgang durch die Kondensationseinheit (4) gereinigt werden, und/oder wobei das entfeuchtete Gas (GD) ganz oder teilweise vor dem Recycling eines Teils (GDR) des entfeuchteten Gases (GD) am Eingang der Einheit (3) zur Erzeugung von Oxidationsgas gereinigt wird.

18. Verwendung nach einem der Ansprüche 13 bis 17, wobei das Kohlenstoffdioxid (CO₂) in dem nicht recycelten Teil (GDNR) des entfeuchteten Gases (GD) aufgefangen wird.

## Claims

1. A combustion system comprising a unit (3) for producing oxidizing gas (GC), a combustion apparatus (1) allowing for combustion of a fuel (C) by means of said oxidizing gas (GC), a condensing unit (4) suitable for condensing the combustion fumes (F; F') produced by the combustion apparatus (1), by bringing the combustion fumes (F; F') into contact with at least one coolant liquid (L), so as to produce a dehumidified gas (GD), recycling means (5) for supplying the oxidizing gas production unit (3) with at least one recycled portion (GDR) of the dehumidified gas at the outlet of the condensing unit (4), a unit (6) for providing molecular oxygen and for supplying molecular oxygen to the oxidizing gas production unit (3), the oxidizing gas production unit (3) supplying the combustion apparatus (1) with an oxidizing gas (GC) originating from the mixing of molecular oxygen and the recycled portion (GDR) of said dehumidified gas (GD), the combustion system also comprising a regulating unit (7), which has the function of automatically regulating the temperature (T_{L}) of the coolant liquid (L) of the condensing unit (4), the combustion system also having the following technical features (a) and/or (b):
a. it comprises at least one sensor (C1) for measuring the absolute or relative humidity in the recycled portion (GDR) of the dehumidified gas and/or at least one sensor (C2) for measuring the absolute or relative humidity in the oxidizing gas (GC) and/or at least one sensor (C3) for measuring the absolute or relative humidity in the combustion fumes and the regulating unit (7) has the function of automatically regulating the temperature (T_{L}) of the coolant liquid (L) of the condensing unit (4) based at least on the absolute or relative humidity measured by said sensor (C1) in the recycled portion (GDR) of the dehumidified gas and/or based at least on the absolute or relative humidity measured in the oxidizing gas (GC) by said sensor (C2) and/or based at least on the absolute or relative humidity measured in the combustion fumes by said sensor (C3)
and/or
b. the combustion apparatus (1) is **characterized by** an operating range defining a maximum absolute or relative humidity and a minimum absolute or relative humidity, and the regulating unit (7) has the function of automatically regulating the temperature (T_{L}) of the coolant liquid (L) of the condensing unit (4) so as to keep the absolute or relative humidity of the oxidizing gas (GC) within said operating range of the combustion apparatus (1).

2. The combustion system according to claim 1, comprising a means (8) for heating the recycled portion (GDR) of said dehumidified gas (GD), and preferably wherein the heating means is suitable for heating the recycled portion (GDR) of said dehumidified gas (GD) by means of calories taken from the combustion fumes.

3. The combustion system according to claim 1 or 2, wherein the regulating unit (7) has the function of automatically regulating the temperature (T_{L}) of the coolant liquid (L) of the condensing unit (4) so as to keep the absolute or relative humidity (TH) of the recycled portion (GDR) of the dehumidified gas GD within a predefined operating range (THₘᵢₙ; THₘₐₓ), and/or so as to keep the absolute or relative humidity (TH) of the oxidizing gas (GC) within a predefined operating range (THₘᵢₙ; THₘₐₓ) and/or so as to keep the absolute or relative humidity (TH) of the combustion fumes within a predefined operating range (THₘᵢₙ; THₘₐₓ) and/or so as to keep the temperature of the coolant liquid (L) of the condensing unit (4) at a predefined temperature or within a within a predefined temperature range.

4. The combustion system according to any one of the preceding claims, comprising a heating means (8) that is suitable for heating the recycled portion (GDR) of said dehumidified gas (GD), such that the temperature of the oxidizing gas (GC) at the inlet of the combustion apparatus (1) is within a predefined temperature range and/or such that the temperature of the oxidizing gas (GC) at the inlet of the combustion apparatus (1) is above the dew point of the oxidizing gas (GC).

5. The combustion system according to any one of the preceding claims, wherein the condensing unit (4) comprises at least one condensing device (40) comprising a bath (401) of coolant liquid (L), and injection means (403) making it possible to move the combustion fumes (F; F') through this bath of coolant liquid (L), and preferably wherein the injection means (403) make it possible to inject the combustion fumes (F; F') below the surface (S) of this bath (401) of coolant liquid (L).

6. The combustion system according to any one of the preceding claims, comprising a supply device (9) suitable for introducing one or more treatment additives into the coolant liquid (L), in order to treat the pollutant(s) potentially captured in the coolant liquid (L), and preferably wherein said at least one treatment additive is a base, and more particularly NaOH, KOH, Ca(OH)₂, or is an acid and more particularly sulfuric acid, or is hydrogen peroxide, or is a flocculating agent.

7. The combustion system according to any one of the preceding claims, comprising at least one sensor (C5) measuring the pH of the coolant liquid (L) or measuring the concentration of at least one pollutant in the coolant liquid (L), and a supply device (9) suitable for automatically introducing one or more treatment additives into the coolant liquid (L), depending on the measured pH or the measured concentration, and preferably wherein said at least one treatment additive is a base, and more particularly NaOH, KOH, Ca(OH)₂, or is an acid and more particularly sulfuric acid, or is hydrogen peroxide, or is a flocculating agent.

8. The combustion system according to any one of the preceding claims, comprising a pollution-removing unit (9A) which is positioned between the condensing unit (4) and the recycling point of the recycled portion (GDR) of the dehumidified gas, and which has the function of removing at least some of the pollutant(s) contained in the dehumidified gas (GD) obtained at the outlet of the condensing unit (4), so as to recycle, as far as the inlet of the oxidizing gas production unit (3), a recycled portion (GDR) of dehumidified gas that has had at least some of its pollution removed, and preferably wherein the pollution-removing unit (9A) is suitable for capturing one or more pollutants selected from the following list: fine particles, SOx, NOx, acids, heavy metals, ammonia, VOCs.

9. The combustion system according to any one of the preceding claims, comprising a pollution-removing unit (9B) which is positioned between the combustion apparatus (1) and the condensing unit (4), and which has the function of removing at least some of the pollutant(s) contained in the combustion fumes (F), before they pass through the condensing unit (4), so as to introduce the combustion fumes (F') into the inlet of the condensing unit (4) with at least some of their pollution removed, and preferably wherein the pollution-removing unit (9B) is suitable for capturing one or more pollutants selected from the following list: fine particles, SOx, NOx, acids, heavy metals, ammonia, VOCs.

10. The combustion system according to any one of claims 8 or 9, wherein the pollution-removing unit (9A; 9B) comprises at least one washing device (90) suitable for bringing the dehumidified gas (GD) that is to have pollution removed or the combustion fumes (F) that are to have pollution removed into contact with a washing liquid (902).

11. The combustion system according to claim 10, wherein the washing device comprises a bath (901) of washing liquid (902), and injection means making it possible to move the dehumidified gas (GD) that is to have pollution removed or the combustion fumes (F) that are to have pollution removed through this bath (901) of washing liquid (902), and preferably wherein injection means make it possible to inject the dehumidified gas (GD) that is to have pollution removed or the combustion fumes (F) that are to have pollution removed below the surface of this bath of washing liquid.

12. The combustion system according to any one of the preceding claims, comprising a unit (10) for capturing carbon dioxide (CO₂) from the non-recycled portion (GDNR) of the dehumidified gas (GD).

13. The use of the combustion system according to any one of the preceding claims for performing the combustion of a fuel (C).

14. The use according to claim 13 wherein the fuel (C) is chosen so as to produce, at the outlet of the combustion apparatus (1), combustion fumes (F) which comprise, and preferably consist of, carbon dioxide (CO₂), water vapor, and optionally molecular oxygen.

15. The use according to claim 14, wherein the fuel (C) is a hydrocarbon, and preferably a saturated hydrocarbon of the alkane type (CₙH₂ₙ₊₂).

16. The use according to any one of claims 13 to 15, wherein the combustion fumes (F) produced at the outlet of the combustion apparatus (1) comprise carbon dioxide (CO₂), water vapor, optionally molecular oxygen, and one or more pollutants, and more particularly one or more pollutants selected from the following list: fine particles, SOx, NOx, acids, heavy metals, ammonia, VOCs.

17. The use according to claim 16, wherein the combustion fumes have all or some of their pollution removed as they pass through the condensing unit (4), and/or wherein the combustion fumes have all or some of their pollution removed before they pass through the condensing unit (4) and/or wherein the dehumidified gas (GD) has all or some of its pollution removed before a portion (GDR) of this dehumidified gas (GD) is recycled at the inlet of the oxidizing gas production unit (3).

18. The use according to any one of claims 13 to 17, wherein the carbon dioxide (CO₂) is captured from the non-recycled portion (GDNR) of the dehumidified gas (GD).
